# EUROPÄISCHE PATENTSCHRIFT

(11) **EP 1 025 406 B1**
(45) Veröffentlichungstag und Bekanntmachung des Hinweises auf die Patenterteilung: **10.09.2003**
(21) Anmeldenummer: 98955461.3
(22) Anmeldetag: 15.10.1998
(51) Int. Cl.: F25D 23/06

(54) **WÄRMEISOLIERENDES GEHÄUSE**
HEAT-INSULATING HOUSING
BOITIER CALORIFUGE

(30) Priorität: 16.10.1997 DE 19745861
(43) Veröffentlichungstag der Anmeldung: 09.08.2000
(73) Patentinhaber: BSH Bosch und Siemens Hausgeräte GmbH, 81669 München (DE)
(72) Erfinder: HIRATH, Jürgen, D-89522 Heidenheim (DE); SCHÜTTE, Markus, D-90409 Nürnberg (DE)
(86) Internationale Anmeldenummer: EP9806554
(87) Internationale Veröffentlichungsnummer: WO99020960

(56) Entgegenhaltungen:
- EP-A- 0 011 239
- DE-A- 19 520 020
- US-A- 5 634 256

## Beschreibung

Die Erfindung betrifft eine wärmeisolierende Wandung mit einem weitestgehend vakuumdichten Außenmantel und einer dazu beabstandeten, zumindest weitestgehend vakuumdichten Innenverkleidung, welche miteinander durch ein zumindest annähernd im Querschnitt U-förmig geformtes, mit seinem Profilschenkeln einerseits am Außenmantel und andererseits an der Innenverkleidung festgesetztes Verbindungsprofil vakuumdicht verbunden sind, welches zusammen mit dem Außenmantel und der Innenverkleidung einen evakuierten Zwischenraum umschließt, wobei das Verbindungsprofil mit Mitteln verdickte, zumindest im Wesentlichen die Materialstärke der Innenverkleidung oder des Außenmantels aufweisende Schenkel besitzt, welche mit einer zumindest annähernd vakuumdichten folienartigen Basis verbunden sind.

Eine derartige wärmeisolierende Wandung ist aus der US-A-5 634 256 bekannt.

Weiterhin ist bei auf Vakuumisolationstechnik basierenden wärmeisolierenden Wandungen bekannt, dass diese heutzutage nahezu ausnahmslos aus zwei im Abstand zueinander angeordneten metallischen Hüllwänden gebildet sind, die gegeneinander durch evakuierbares Stützmaterial abgestützt sind und die entlang ihrer Konturen mit einem als U-Profil ausgebildeten Verbindungsprofil zur Herstellung eines evakuierbaren Raumes verschweißt sind. Bei der Ausführung dieser Schweißverbindung ist darauf zu achten, dass das Verbindungsprofil, welches zur Vermeidung einer das Isolationsvermögen der wärmeisolierenden Wandung beträchtlich herabsetzenden Wärmeleitung möglichst dünnwandig ausgeführt sein soll, durch die Wärmezufuhr beim Schweißvorgang nicht gegebenenfalls zu Undichtigkeiten führenden Verwerfungen neigt. Diese versucht man durch eine kompliziert aufgebaute Spanntechnik zu vermeiden, wobei hierbei zusätzlich die Problematik besteht, die erforderliche Spannmechanik auf dem sehr beengtem Raumangebot unterzubringen. Um sowohl die aufwendige Spannmechanik als auch die Verwerfungen zu vermeiden, ist man letztendlich dazu übergegangen, das Verbindungsprofil allseitig mit einer Materialstärke auszustatten, welche in der Größenordnung der Hüllschale liegt. Dies führt jedoch dazu, dass zur Abstützung der beiden Hüllwände nur noch kostenintensive Stützmaterialien, wie bspw. Glasfasern, zur Vermeidung eines die Isolationswirkung der wärmeisolierenden Wandung herabsetzenden Wärmestromes zum Einsatz kommen können, welche zudem mit einer zu einem Hohleigengewicht führenden hohen relativen Dichte behaftet sind.

Der Erfindung liegt die Aufgabe zugrunde, eine wärmeisolierende Wandung gemäß dem Oberbegriff des Anspruches 1 mit einfachen konstruktiven Maßnahmen zu verbessern.

Diese Aufgabe wird gemäß der Erfindung dadurch gelöst, dass die vakuumdichte, durch eine Schweißverbindung erzeugte Verbindung zwischen den Schenkeln des Verbindungsprofils einerseits und dem Außenmantel sowie der Innenverkleidung andererseits im Nahbereich der Basis des U-profilartigen Verbindungsprofils vorgesehen ist.

Dadurch wird der Vorteil erzielt, dass die vakuumseitige Länge der Überlappung der beiden Verbindungspartner ziemlich gering gehalten ist, wodurch mögliche Gasanschlüsse zwischen den Verbindungspartner minimiert sind, so dass ein aus den Gasanschlüssen resultierender Druckanstieg im evakuierten Zwischenraum weitestgehend vermieden ist.

Weiterhin ist durch die erfindungsgemäße Lösung sichergestellt, dass die Verbindungspartner, nämlich die Schenkel des U-Profils einerseits und der Außenmantel bzw. die Innenverkleidung andererseits an der Verbindungsstelle ein im wesentlichen gleichartiges Schmelzverhalten zeigen, wodurch Verwerfungen des U-Profils an der Verbindungsstelle und daraus resultierende potentielle Leckagen auch in der Großserie sicher vermieden sind und somit die Prozesssicherheit erheblich gesteigert ist. Darüber hinaus ist trotz der geschaffenen optimalen Verbindungsvoraussetzungen zwischen dem U-Profil und den Wandungsdeckschalen eine minimale Wärmeleitung über die Basis des U-profilartigen Verbindungselementes erreicht. Durch die Anpassung der Materialstärke an der Verbindungsstelle des U-Profils an die Materialstärke der Innenverkleidung bzw. des Außenmantels lässt sich die Schweißgeschwindigkeit an der Verbindungsstelle der beiden Verbindungspartner und somit die Prozessgeschwindigkeit erheblich steigern. Femer erlaubt die konstruktive Ausgestaltung der Verbindungsstelle zwischen den Verbindungspartnern eine gewisse Flexibilität bei der Auswahl des zur Anwendung kommenden Schweißverfahrens, wobei durch die erfindungsgemäße Lösung die Möglichkeit eröffnet ist, hohe Arbeitsgeschwindigkeiten erlaubende Strahlschweißverfahren effektiv einzusetzen. Die schenkelseitige Anpassung der Verbindungsstelle an die Materialstärke der Innenverkleidung bzw. des Außenmantels erlaubt zudem in Verbindung mit den verschiedenen Strahlschweißverfahren eine deutlich günstigere Verspannung der beiden Verbindungspartner zueinander, so dass die zur Anwendung kommende Spanntechnik in Form von Spannwerkzeugen bei Beibehaltung der leckagefreien Verschweißung deutlich vereinfacht werden kann.

Gemäß einer bevorzugten Ausführungsform des Gegenstandes der Erfindung ist vorgesehen, dass die Mittel zur Erzeugung der Verdickung an jedem Schenkel des U-Profils durch wenigstens je ein Blendenelement gebildet sind, welches zusammen mit der Innenverkleidung oder dem Außenmantel eine Aufnahme bildet, in welcher der jeweilige Schenkel des U-Profils als Zwischenlage angeordnet ist.

Hierdurch ist die Möglichkeit eröffnet, das als U-Profil ausgebildete Verbindungsprofil durchgehend aus folienartigem Material, wie z.B. Edelstahl oder korrosionsgeschütztem Stahl fertigen zu können, welches dann an den als Schenkel dienenden Abschnitten durch das Blendenelement mit der Innenverkleidung oder dem Außenmantel verspannbar ist. Hierdurch ist nicht nur eine Fügehilfe bereitgestellt, sondern auch eine Anhebung der Materialstärke der zu verschweißenden Verbindungspartner bewirkt, durch welche sich der Verschweißvorgang nicht nur beschleunigen sondern auch vakuumdicht in der Großserie ausführen lässt.

Gemäß einer alternativen Ausgestaltung des Gegenstandes der Erfindung ist vorgesehen, dass die Mittel zur Erzeugung der Verdickung an der Verbindungsstelle durch mehrmaliges Umfalten des jeweiligen Schenkels des aus folienartigem Material, wie Edelstahl, korrosionsgeschütztem Stahl oder dergleichen gefertigten U-Profils erzeugt sind.

Durch eine derartige Ausführungsform eines Verbindungsprofils ist der Fügevorgang der Verbindungspartner wesentlich erleichtert, da keine zusätzlichen Elemente zu halten und zu positionieren sind.

Entsprechend einer weiteren alternativen Ausführungsform des Gegenstandes der Erfindung ist vorgesehen, dass die Mittel zur Erzeugung der Verdickung an der Verbindungsstelle durch im wesentlichen die Materialstärke des Außenmantels oder der Innenverkleidung aufweisende Schenkelelemente gebildet sind, welche mit einer sie verbindenden folienartigen Basis zusammengefügt sind und zusammen mit der Basis das U-Profil bilden.

Hierdurch ergibt sich die Möglichkeit, die nach Anforderung mit unterschiedlicher Materialstärke ausgestatteten Schenkelelemente mit einer folienartigen, dünnwandigen Basis zu kombinieren, um den Verschweißvorgang des Verbindungsprofils mit dem Außenmantel bzw. mit der Innenverkleidung kostengünstig optimieren zu können. Das vakuumdichte Verbinden der z.B. aus Edelstahl oder korrosionsgeschütztem Stahl gefertigten Schenkelelemente mit der folienartigen Basis erfolgt dabei kostengünstig durch einen separaten Schweißvorgang.

Eine besonders einfache Kontrolle der Güte der Schweißverbindung ergibt sich, wenn nach einer nächsten vorteilhaften Ausgestaltung des Gegenstandes der Erfindung vorgesehen ist, dass die Mittel zur Erzeugung der Verdickung eine Materialstärke aufweisen, welche eine sichtbare Schweißwurzel an der Innenverkleidung bzw. dem Außenmantel ermöglicht.

Gemäß einer alternativen Ausführungsform des Gegenstandes der Erfindung ist vorgesehen, dass die Mittel zur Erzeugung der Verdickung eine Materialstärke aufweisen, durch welche eine sichtbare Schweißwurzel an der Innenverkleidung bzw. dem Außenmantel verhindert ist.

Durch eine derartige Ausführungsform entfallen Schutzmaßnahmen, wie die Bereitstellung von Schutzgas während des Schweißvorganges zur Verhinderung einer Oxidation der Schweißwurzel. Darüber hinaus sind gegebenenfalls zu Undichtheit des evakuierten Zwischenraumes zwischen dem Außenmantel und der Innenverkleidung führende Poren und Risse an der Schweißwurzel vermieden. Darüber hinaus weisen die Verbindungspartner, insbesondere der Außenmantel und die Innenverkleidung, glatte Sichtflächen auf, welche ein definiertes Anbringen von Funktionselementen, wie beispielsweise Schnappverbindungen oder dergleichen deutlich einfacher ermöglichen.

Nach einer weiteren bevorzugten Ausführungsform des Gegenstandes der Erfindung ist vorgesehen, dass die Schweißverbindung zwischen den Schenkeln des Verbindungsprofils einerseits sowie dem Außenmantel und der Innenverkleidung, andererseits im Nahbereich der Basis des U-profilartigen Verbindungsprofils vorgesehen ist.

Durch eine derartige Anbringung der Schweißnaht ist die vakuumseitige Länge der Überlappung der beiden Verbindungspartner ziemlich gering gehalten, wodurch mögliche Gaseinschlüsse zwischen den Verbindungspartnem minimiert sind, so dass ein aus den Gaseinschlüssen resultierender Druckanstieg im evakuierten Zwischenraum weitestgehend vermieden ist.

Gemäß einer nächsten bevorzugten Ausführungsform des Gegenstandes der Erfindung ist vorgesehen, dass die Schweißverbindung zwischen den Schenkeln des Verbindungsprofils einerseits und dem Außenmantel sowie der Innenverkleidung andererseits durch ein Strahlschweißverfahren oder durch ein Rollennahtschweißen erzeugt ist.

Im Fall der Anwendungen eines Strahlschweißverfahrens, wie beispielsweise eines Laserstrahl- oder Elektronenstrahl-Schweißverfahrens ergibt sich, resultierend aus einer hohen Schweißgeschwindigkeit, eine hohe Herstellgeschwindigkeit für die wärmeisolierenden Wandungen. Die Anwendung eines Rollennahtschweißens gibt dagegen einen anlagetechnisch günstigen Aufbau.

Besonders prozesssicher gefertigt werden kann die wärmeisolierende Wandung bei einem Kühlgerät mit einem wärmeisolierenden Gehäuse und einer daran angeschlagenen wärmeisolierenden Tür, wenn nach einer nächsten bevorzugten Ausführungsform des Gegenstandes der Erfindung vorgesehen ist, dass das wärmeisolierende Gehäuse und die wärmeisolierende Tür nach einem der Ansprüche 1 bis 8 ausgebildet sind.

Ebenso besonders prozesssicher gefertigt werden kann die wärmeisolierende Wandung bei einem Haushaltsherd mit einer wärmeisolierend ausgebildeten Herdmuffel, wenn nach einer letzten bevorzugten Ausführungsform des Gegenstandes der Erfindung vorgesehen ist, dass die Herdmuffel nach einem der Ansprüche 1 bis 8 ausgebildet ist.

Die Erfindung ist in der nachfolgenden Beschreibung anhand von drei in der beigefügten Zeichnung vereinfacht dargestellten Ausführungsbeispielen erläutert.

Es zeigen:
- Fig. 1: in vereinfachter schematischer Darstellung ein wärmeisolierendes Gehäuse für einen Haushaltskühlschrank mit einem Außenmantel und einer dazu beabstandeten Innenverkleidung, welche miteinander durch ein U-förmiges Verbindungsprofil vakuumdicht verbunden sind, in Schnittdarstellung von der Seite,
- Fig. 2: das Gehäuse ausschnittsweise im Bereich seiner Verbindung mit einem Verbindungsprofil, gemäß einer ersten Ausführungsvariante zu Erzielung einer Materialstärkesteigerung an der Verbindungsstelle, in Schnittdarstellung.
- Fig. 3: das Gehäuse ausschnittsweise im Bereich seiner Verbindung mit dem Verbindungsprofil, gemäß einer weiteren Ausführungsvariante zur Erzielung einer Materialstärkesteigerung an der Verbindungsstelle, in Schnittdarstellung und
- Fig. 4: das Gehäuse ausschnittsweise im Bereich seiner Verbindung mit dem Verbindungsprofil gemäß einer dritten Ausführungsvariante zur Erzielung einer Materialstärkesteigerung an der Verbindungsstelle, in Schnittdarstellung.

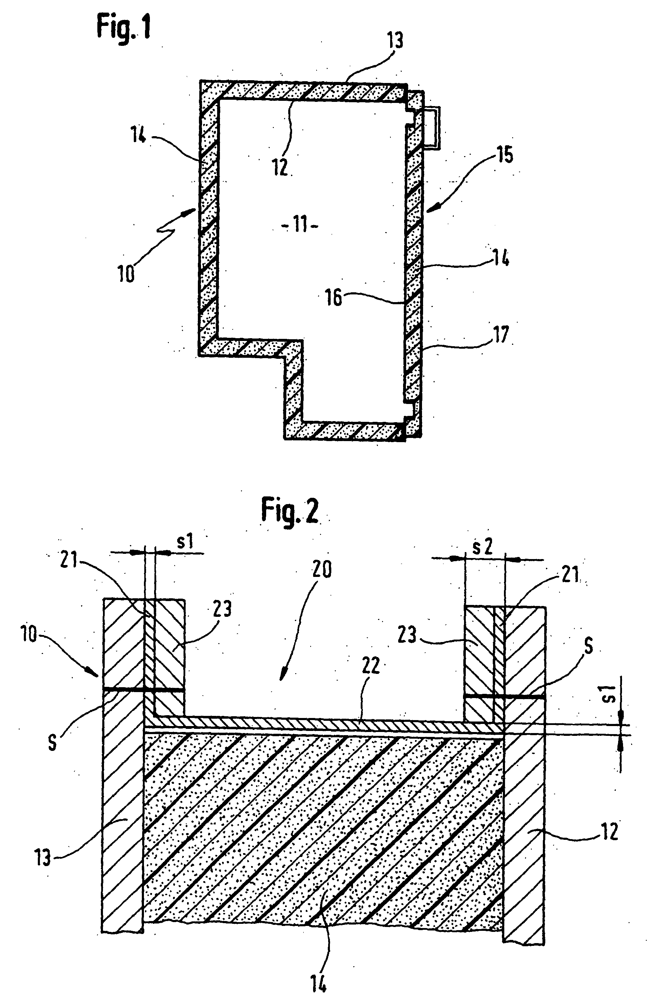

In Fig. 1 ist ein zur Verwendung für einen Haushaltskühl- oder -Gefrierschrank geeignetes wärmeisolierendes Gehäuse 10 gezeigt, innerhalb welchem ein als Kühlraum ausgebildeter Nutzraum 11 vorgesehen ist, welcher von einer vakuumdichten, beispielsweise aus einem 0,4 mm starken Edelstahlblech oder korrosionsgeschütztem Stahlblech geformten Innenverkleidung 12 ausgekleidet ist. Im Abstand zur Innenverkleidung 12 ist ein aus gleichem Material geformter, vakuumdichter Außenmantel 13 angeordnet. Zwischen dem Außenmantel 13 und der Innenverkleidung 17 ist ein zu deren Abstützung dienendes, evakuierbares Wärmeisolationsmaterial 14, wie beispielsweise offenzelliger Polyurethanschaum oder offenzelliger Polystytrolschaum eingebracht. Ein solches Wärmeisolationsmaterial 14 dient auch als wärmeisolierende Füllung einer am Gehäuse 10 angeschlagenen Tür 15, welche wie das Gehäuse 10 an seiner Innenseite eine vakuumdichte Innenverkleidung 16 und einen dazu beabstandeten vakuumdichten Außenmantel 17 aufweist, welche aus gleichem Material wie die Innenverkleidung 12 und der Außenmantel 13 geformt sind. Sowohl die Innenverkleidung 16 und der Außenmantel 17 als auch die Innenverkleidung 12 und der Außenmantel 13 sind an ihren freien Rändern miteinander vakuumdicht verbunden, wodurch zwischen diesen Hüllschalen ein evakuierbarer Zwischenraum gebildet ist, welcher mit dem Wärmeisolationsmaterial 14 zur Abstützung dieser Hüllschalen verhüllt ist.

Wie insbesondere aus Fig. 2 hervorgeht, dient zur Herstellung des vakuumdichten Verbundes zwischen der Innenverkleidung 12 und dem Außenmantel 13 bzw. der Innenverkleidung 16 und dem Außenmantel 17 ein im Querschnitt U-förmig geformtes Verbindungsprofil 20, welches gemäß einer ersten Ausführungsvariante sowohl an seinen Schenkeln 21 als auch an seiner die Schenkel 21 verbindenden Basis 22 mit einer folienartigen Materialstärke ausgestattet ist und welches beispielsweise aus einer Edelstahlfolie oder korrosionsgeschützten Stahlfolie mit einer Materialstärke s1 von ca. 0,1 mm geformt ist. Das Verbindungsprofil 20, welches im weiteren am Beispiel des Gehäuses 10 beschrieben ist, ist hinsichtlich der Breite seiner Basis 22 an die lichte Weite zwischen der Innenverkleidung 12 und dem Außenmantel 13 angepasst und mit seiner Basis 22 an das Wärmeisolationsmaterial 14 herangeführt. Der vakuumdichte Verbund zwischen der Innenverkleidung 12 und dem Außenmantel 13 sowie dem Verbindungsprofil 20 wird durch eine Schweißverbindung erzeugt, welche im Nahbereich der Basis 22 und entlang der Schenkel 21 angeordnet ist. Um bei der Ausführung der Schweißverbindung zu verhindern, dass sich die folienartigen Schenkel unter dem Wärmeeinfluss des Schweißvorganges verwerfen, sind entlang der Schenkel 21 verlaufende Blendenelemente 23 vorgesehen,'welche zusammen mit den folienartigen Schenkeln zumindest annähernd die Materialstärke s2 der Innenverkleidungen bzw. der Außenmäntel ergeben und welche zusammen mit den die Schenkeln 21 anhand nicht gezeigter Spannvorrichtungen gegen die Innenseite der Innenverkleidung bzw. des Außenmantels gedrückt werden, so dass die folienartigen Schenkel flächig an der Innenseite der Innenverkleidung 12 bzw. des Außenmantels 13 anliegen. Darüber hinaus dienen die Blendenelemente 23 zur Vergrößerung der Materialstärke der Schenkel 21 an ihrer Verbindungsstelle mit der Innenverkleidung 12 bzw. des Außenmantels 13 dazu ein annähernd gleiches Aufschmelzverhalten der beiden Verbindungspartner während ihres Verschweißvorganges zu erreichen. Hierbei durchsetzt eine beim Verschweißvorgang erzeugte Schweißnaht S neben der Innenverkleidung 12 bzw. den Außenmantel 13 auch die Schenkel 21 und die Blendenelemente 23 vollkommen.

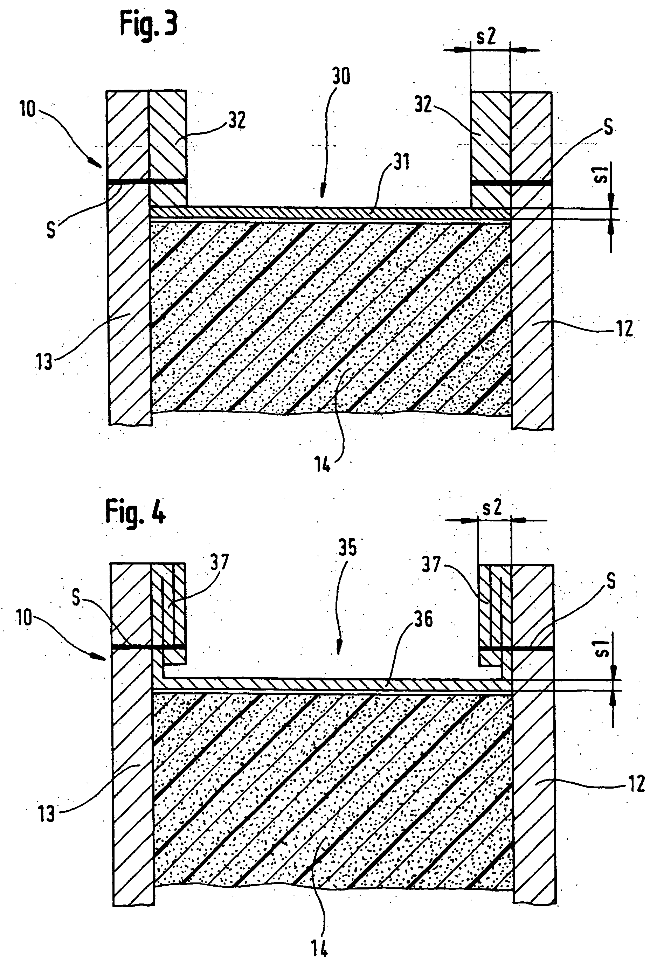

Gemäß Fig. 3 ist zur Verbindung der Innenverkleidung 12 mit dem Außenmantel 13 eine weitere Ausführungsform eines im Querschnitt U-förmig ausgebildeten Verbindungsprofils 30 vorgesehen, dessen Basis 31 wie die Basis des Verbindungsprofils 20 folienartig ausgebildet ist, während dessen Schenkel 32, welche mit der Basis 31 schweißtechnisch zusammengefügt sind, mit einer Materialstärke s2 ausgestattet sind, welche im wesentlichen der Materialstärke der Innenverkleidung 12 und des Außenmantels 13 entspricht. Durch die weitestgehendw Anpassung der Schenkel 32 in ihrer Materialstärke s2 an die Materialstärke der Innenverkleidung 12 und des Außenmantels 13 ist erreicht, dass ein gleichmäßiger Aufschmelzvorgang zwischen den mittels eines Schweißverfahrens zu verbindenden Verbindungspartnern, nämlich das Verbindungsprofil mit der Innenverkleidung bzw. mit dem Außenmantel, stattfinden kann. Dabei ist eine Schweißnaht S erzielt, welche die Verbindungspartner vollkommen durchsetzt und welche entlang der Schenkel 32 eine gleichmäßige, dauerhaft vakuumdichte Verbindung der Verbindungspartner sichernde Qualität aufweist.

Eine dritte Ausführungsvariante für ein zum vakuumdichten Verbinden der Innenverkleidung 12 mit dem Außenmantel 13 ist in Fig. 4 gezeigt. Ebenso wie die Verbindungsprofile 20 und 30 ist das Verbindungsprofil 35 mit einer folienartigen Basis 36 ausgestattet, an welche sich zwei im wesentlichen die Materialstärke der Innenverkleidung 12 oder des Außenmantels 13 aufweisende Schenkel 37 einstückig anschließen. Diese sind hinsichtlich ihrer Materialstärke durch mehrmalige spaltfreie Schichtung der Seitenkanten eines mit folienartiger Materialstärke ausgestatteten Blechzuschnittes (z.B. Edelstahl oder korrosionsgeschütztem Stahl), beispielsweise durch mehrmaliges Umfalten erzeugt, wobei der nicht durch Falten bearbeitete Teil des Edelstahl-Blechzuschnitts die Basis 36 bildet. Durch die Schichtung des folienartigen Materials weisen die Schenkel 37 eine Materialstärke s2 auf, welche im wesentlichen der Materialstärke der Innenverkleidung 12 oder des Außenmantels 13 entspricht. Durch die Vergrößerung der Materialstärke an den Schenkeln 37 tritt annähernd ein gleicher Aufschmelzvorgang beim Zuführen von Schweißenergie zwischen den Schenkeln 37 und der Innenverkleidung 12 oder des Außenmantels 13 auf, wobei gleichzeitig ein Verwerfen der Schenkel 37 beim Verschweißen der beiden Verbindungspartner mittels der Schweißnaht S durch die Materialstärkevergrößerung weitestgehend unterbunden ist.

Die erwähnten Konstruktionen der Verbindungsprofile 20, 30 und 35 lassen sich natürlich zum Verbinden der Innenverkleidung 16 bzw. des Außenmantels 17 an der Tür 15 anwenden, wobei deren Innenverkleidung bzw. deren Außenmantel zum Anbringen des Verbindungsprofils entsprechend zu gestalten ist.

Entgegen der gezeigten Anbringung des Verbindungsprofils ist es auch möglich, dieses so mit der Innenverkleidung bzw. dem Außenmantel zu verbinden, dass diese beiden Deckschichten des Gehäuses an ihren freien Rändern von den Schenkeln des Verbindungsprofils übergriffen sind.

Der beispielhaft am Gehäuse eines Haushalts-Kühlschrankes dargelegte Aufbau eines wärmeisolierenden Gehäuses eignet sich auch zum Aufbau einer den Backraum eines Haushaltsherdes umschließenden Herdmuffel, wobei die dabei als Abstützung der Innenverkleidung und des Außenmantels dienenden evakuierbaren Wärmeisolationsmaterialien entsprechend den bei Haushaltsherden auftretenden Temperaturanforderungen auszubilden sind.

## Patentansprüche

1. Wärmeisolierende Wandung mit einem weitestgehend vakuumdichten Außenmantel und einer dazu beabstandeten, zumindest weitestgehend vakuumdichten Innenverkleidung, welche miteinander durch ein zumindest annähernd im Querschnitt U-förmig geformtes, mit seinen Profilschenkeln einerseits am Außenmantel und andererseits an der Innenverkleidung festgesetztes Verbindungsprofil vakuumdicht verbunden sind, welches zusammen mit dem Außenmantel und der Innenverkleidung einen evakuierten Zwischenraum umschließt, wobei das Verbindungsprofil mit Mitteln verdickte, zumindest im Wesentlichen der Materialstärke der Innenverkleidung oder des Außenmantels aufweisende Schenkel besitzt, welche mit einer zumindest annähernd vakuumdichten folienartigen Basis verbunden sind, **dadurch gekennzeichnet, dass** die vakuumdichte, durch eine Schweißverbindung erzeugte Verbindung zwischen den Schenkeln (21, 32, 37) des Verbindungsprofils (20, 30, 35) einerseits und demAußenmantel (13, 17) sowie der Innenverkleidung (12, 16) andererseits im Nahbereich der Basis (22, 31, 36) des U-profilartigen Verbindungsprofils (20, 30, 35) vorgesehen ist.

2. Wärmeisolierende Wandung nach Anspruch 1, **dadurch gekennzeichnet, dass** die vakuumdichte Verbindung zwischen den Schenkeln (21, 32, 37) des Verbindungsprofils (20, 30, 35) einerseits und dem Außenmantel (13, 17) sowie der Innenverkleidung (12, 16) andererseits im Nahbereich der Basis (22, 31, 36) des U-profilartigen Verbindungsprofils (20, 30, 35) als Schweißverbindung ausgebildet ist.

3. Wärmeisolierende Wandung nach einem der Ansprüche 1 oder 2, **dadurch gekennzeichnet, dass** die Schweißverbindung zwischen den Schenkeln (21, 32, 37) des Verbindungsprofils (20, 30, 35) einerseits und dem Außenmantel (13, 17) sowie der Innenverkleidung (12, 16) durch ein Strahlschweißverfahren oder durch Rollnahtschweißen erzeugt ist.

4. Wärmeisolierende Wandung nach einem der Ansprüche 1-3, **dadurch gekennzeichnet, dass** die Mittel zur Erzeugung der Verdickung an jedem Schenkel (21) des U-Profils (20) durch wenigstens je ein Blendenelement (23) gebildet sind, welches zusammen mit der Innenverkleidung (12, 16) oder dem Außenmantel (13, 17) eine Aufnahme bildet, in welcher der jeweilige Schenkel (21) des U-Profils (20) als Zwischenlage angeordnet ist.

5. Wärmeisolierende Wandung nach einem der Ansprüche 1-3, **dadurch gekennzeichnet, dass** die Mittel zur Erzeugung der Verdickung an der Verbindungsstelle durch mehrmaliges Umfalten des jeweiligen Schenkels (37) des U-Profils (35) erzeugt ist.

6. Wärmeisolierende Wandung nach einem der Ansprüche 1-3, **dadurch gekennzeichnet, dass** die Mittel zur Erzeugung der Verdickung an der Verbindungsstelle durch im wesentlichen die Materialstärke des Außenmantels (13, 17) oder der Innenverkleidung (12, 16) aufweisende Schenkelelemente (32) gebildet sind, welche mit einer sie verbindenden folienartigen Basis (31) zusammengefügt sind und zusammen mit der Basis (31) das U-Profil (30) bilden.

7. Wärmeisolierende Wandung nach einem der Ansprüche 1 bis 6, **dadurch gekennzeichnet, dass** die Mittel zur Erzeugung der Verdickung eine Materialstärke aufweisen, welche eine sichtbare Schweißwurzel an der Innenverkleidung (12, 16) bzw. dem Aüßenmantel (13, 17) ermöglicht.

8. Wärmeisolierende Wandung nach einem der Ansprüche 1 bis 6, **dadurch gekennzeichnet, dass** die Mittel zur Erzeugung der Verdickung eine Materialstärke aufweisen, durch welche eine sichtbare Schweißwurzel an der Innenverkleidung (12, 16) bzw. dem Außenmantel (13, 17) verhindert ist.

9. Kältegerät mit einem isolierten Gehäuse und einer daran angeschlagenen wärmeisolierten Tür, **dadurch gekennzeichnet, dass** das wärmeisolierte Gehäuse (10) und die wärmeisolierte Tür (15) nach einem der Ansprüche 1 bis 8 ausgebildet sind.

10. Haushaltsherd mit einer wärmeisoliert ausgebildeten Herdmuffel, **dadurch gekennzeichnet, dass** die Herdmuffel nach einem der Ansprüche 1 bis 8 ausgebildet ist.

## Claims

1. Thermally insulating wall with a substantially vacuum-tight outer casing and an at least substantially vacuum-tight inner lining arranged at a spacing therefrom, which are connected together in vacuum-tight manner by a connecting profile member formed to be at least approximately U-shaped in cross-section and fixed by its profile limbs on the one hand at the outer casing and on the other hand at the inner lining and which together with the outer casing and the inner lining encloses an evacuated intermediate space, wherein the connecting profile member has limbs which are thickened by means to at least substantially the material thickness of the inner lining or the outer casing and which are connected with an at least approximately vacuum-tight foil-like base, **characterised in that** the vacuum-tight connection, which is produced by a weld connection, between the limbs (21, 32, 37) of the connecting profile member (20, 30, 35) on the one hand and the outer casing (13, 17) as well as the inner lining (12, 16) on the other hand is provided in the vicinity of the base (22, 31, 36) of the connecting profile member (20, 30, 35) of U-profile shape.

2. Thermally insulating wall according to claim 1, **characterised in that** the vacuum-tight connection between the limbs (21, 32, 37) of the connecting profile member (20, 30, 35) on the one hand and the outer casing (13, 17) as well as the inner lining (12, 16) on the other hand is formed in the vicinity of the base (22, 31, 36) of the connecting profile member (20, 30, 35), which is of U-profile shape, as a weld connection.

3. Thermally insulating wall according to one of claims 1 and 2, **characterised in that** the weld connection between the limbs (21, 32, 37) of the connecting profile member (20, 30, 35) on the one hand and the outer casing (13, 17) as well as the inner lining (12, 16) is produced by a radiation welding method or by roll-seam welding.

4. Thermally insulating wall according to one of claims 1 to 3, **characterised in that** the means for producing the thickening at each limb (21) of the U-shaped profile member (20) are each formed by at least one cover element (23), which forms together with the inner lining (12, 16) or the outer casing (13, 17) a receptacle in which the respective limb (21) of the U-shaped profile member (20) is arranged as intermediate layer.

5. Thermally insulating wall according to one of claims 1 to 3, **characterised in that** the means for producing the thickening at the connecting point is produced by multiple folding over of the respective limb (37) of the U-shaped profile member (35).

6. Thermally insulating wall according to one of claims 1 to 3, **characterised in that** the means for producing the thickening at the connecting point are formed by limb elements (32) which have substantially the material thickness of the outer casing (13, 17) or of the inner lining (12, 16) and are joined with a foil-like base (31), which connects them, and which together with the base (31) form the U-shaped profile member (30).

7. Thermally insulating wall according to one of claim 1 to 6, **characterised in that** the means for producing the thickening have a material thickness which enables a visible weld root at the inner lining (12, 16) or the outer casing (13, 17).

8. Thermally insulating wall according to one of claims 1 to 6, **characterised in that** the means for producing the thickening have a material thickness by which a visible weld root at the inner lining (12, 16) or the outer casing (13, 17) is prevented.

9. Refrigerating appliance with an insulated housing and a thermally insulated door abutting thereagainst, **characterised in that** the thermally insulated housing (10) and the thermally insulated door (15) are constructed according to one of claims 1 to 8.

10. Domestic oven with an oven muffle constructed to be thermally insulated, **characterised in that** the oven muffle is constructed according to one of claims 1 to 8.

## Revendications

1. Paroi c alorifuge comprenant une enveloppe extérieure le plus possible étanche au vide et un revêtement intérieur situé à une distance de celle-ci et étanche au vide, au moins dans la plus large mesure possible, qui sont reliés l'un à l'autre de manière étanche au vide grâce à un profilé d'assemblage dont la section transversale a, au moins approximativement, la forme d'un U et qui est fixé, avec ses branches de profilé, sur l'enveloppe extérieure d'une part et sur le revêtement intérieur d'autre part, lequel profilé d'assemblage entoure, avec l'enveloppe extérieure et le revêtement intérieur, un espace intermédiaire dans lequel le vide est fait, le profilé d'assemblage possédant des branches épaissies par des moyens et qui présentent, au moins essentiellement, l'épaisseur de matériau du revêtement intérieur ou de l'enveloppe extérieure et qui sont reliées à une base similaire à une feuille qui est, au moins à peu près, étanche au vide, **caractérisée en ce que** la jonction étanche au vide produite par un joint soudé entre les branches (21, 32, 37) du profilé d'assemblage (20, 30, 35) d'une part et l'enveloppe extérieure (13, 17) ainsi que le revêtement intérieur (12, 16) d'autre part est prévue dans la zone proche de la base (22, 31, 36) du profilé d'assemblage (20, 30, 35) similaire à un profilé en U.

2. Paroi calorifuge selon la revendication 1, **caractérisée en ce que** la jonction étanche au vide entre les branches (21, 32, 37) du profilé d'assemblage (20, 30, 35) d'une part et l'enveloppe extérieure (13, 17) ainsi que le revêtement intérieur (12, 16) d'autre part est exécutée en tant que joint soudé dans la zone proche de la base (22, 31, 36) du profilé d'assemblage (20, 30, 35) similaire à un profilé en U.

3. Paroi calorifuge selon l'une des revendications 1 ou 2, **caractérisée en ce que** le joint soudé entre les branches (21, 32, 37) du profilé d'assemblage (20, 30, 35) d'une part et l'enveloppe extérieure (13, 17) ainsi que le revêtement intérieur (12, 16) est produit par un procédé de soudage par rayonnement ou par un soudage en ligne continue par mollettes.

4. Paroi calorifuge selon l'une des revendications 1-3, **caractérisée en ce que** les moyens servant à produire l'épaississement au niveau de chaque branche (21) du profilé en U (20) sont formés par au moins un élément d'écran (23) respectif qui forme, avec le revêtement intérieur (12, 16) ou l'enveloppe extérieure (13, 17), un logement dans lequel la branche respective (21) du profilé en U (20) est située en tant que couche intermédiaire.

5. Paroi calorifuge selon l'une des revendications 1-3, **caractérisée en ce que** les moyens servant à produire l'épaississement au niveau du point de jonction sont produits en pliant plusieurs fois la branche respective (37) du profilé en U (35).

6. Paroi calorifuge selon l'une des revendications 1 -3, **caractérisée en ce que** les moyens servant à produire l'épaississement au niveau du point de jonction sont formés par des éléments de branche (32) présentant essentiellement l'épaisseur de matériau de l'enveloppe extérieure (13, 17) ou du revêtement intérieur (12, 16), qui sont assemblés avec une base (31) similaire à une feuille qui les relie et forment, avec la base (31), le profilé en U (30).

7. Paroi calorifuge selon l'une des revendications 1 à 6, **caractérisée en ce que** les moyens servant à produire l'épaississement présentent une épaisseur de matériau permettant de rendre visible la racine de la soudure au niveau du revêtement intérieur (12, 16) resp. de l'enveloppe extérieure (13, 17).

8. Paroi calorifuge selon l'une des revendications 1 à 6, **caractérisée en ce que** les moyens servant à produire l'épaississement présentent une épaisseur de matériau empêchant que la racine de la soudure soit visible au niveau du revêtement intérieur (12, 16) resp. de l'enveloppe extérieure (13, 17).

9. Appareil frigorifique comprenant un boîtier calorifuge et une porte calorifuge montée sur celui-ci, **caractérisé en ce que** le boîtier calorifuge (10) et la porte calorifuge (15) sont exécutés selon une des revendications 1 à 8.

10. Cuisinière domestique comprenant un moufle exécuté de manière calorifuge, **caractérisée en ce que** le moufle est exécuté selon une des revendications 1 à 8.
